# EUROPEAN PATENT APPLICATION

(11) **EP 4 644 944 A1**
(43) Date of publication of application: **05.11.2025**
(21) Application number: 25173133.7
(22) Date of filing: 29.04.2025
(51) Int. Cl.: G01S 7/00, G01S 7/03, G01S 7/35, G01S 7/41, G01S 13/32, G01S 13/42, G01S 13/56, H04W 84/12

(54) **USING WI-FI TRANSCEIVER FOR RADAR SENSING**

(30) Priority: 03.05.2024 US 202463641972 P; 28.04.2025 US 202519190821
(71) Applicant: MEDIATEK INC., Hsinchu City 30078 (TW)
(72) Inventor: TSAI, Tsung-Han, 30078 Hsinchu City (TW); SHIH, Yi-Shing, 30078 Hsinchu City (TW); LIU, Hsuan-Yu, 30078 Hsinchu City (TW); CHEN, Jun-Shen, 30078 Hsinchu City (TW); WANG, Ting-Hsiang, 30078 Hsinchu City (TW); LIU, I-Ying, 30078 Hsinchu City (TW)
(74) Representative: Haseltine Lake Kempner LLP

(57) **Abstract**

The present invention provides a wireless communication device comprising a transceiver circuit (100) having a transmitter (110) and a receiver (120). The wireless communication device is capable of operating in a Wi-Fi mode or in a radar mode. When the wireless communication device operates in the radar mode, the transceiver circuit (100) detects a presence and/or characteristics of an object by receiving a reflected signal by the receiver (120). When the wireless communication device operates in the Wi-Fi mode, the transceiver circuit (100) transmits and receives Wi-Fi signals.

## Description

### Field of the Invention

The present invention relates to W-Fi transceiver.

### Background of the Invention

Indoor radar sensing refers to the use of radar technology to detect and monitor objects, movements, or positions within indoor environments. This technology has wide applications in fields such as smart homes, security monitoring, healthcare, and autonomous vehicles. The basic concept is to emit high-frequency electromagnetic waves and analyze the reflected signals to determine the location, movement, and other characteristics of objects based on the time delay, strength, and frequency shift of the reflected signals. However, high-performance radar sensors may be expensive, and radar signals may be interfered with by other electronic devices within indoor environments. Therefore, designing a low-cost radar detection technology with a certain level of quality is an important challenge.

### Summary of the Invention

Therefore, one of the objectives of the present invention is to provide a wireless transceiver that integrates both Wi-Fi and radar functions, to solve the above-mentioned problems.

This is achieved by a wireless communication device according to claim 1, and a control method of a wireless communication device according to claim 9. The dependent claims pertain to corresponding further developments and improvements.

As will be seen more clearly from the detailed description following below, a wireless communication device comprising a transceiver circuit having a transmitter and a receiver is disclosed. The wireless communication device is capable of operating in a Wi-Fi mode or in a radar mode. When the wireless communication device operates in the radar mode, the transceiver circuit detects a presence and/or characteristics of an object by receiving a reflected signal by the receiver. When the wireless communication device operates in the Wi-Fi mode, the transceiver circuit transmits and receives Wi-Fi signals.

As will be seen more clearly from the detailed description following below, a control method of a wireless communication device comprises steps of: controlling the wireless communication device to operate in a Wi-Fi mode or in a radar mode; when the wireless communication device operates in the radar mode, detecting a presence and/or characteristics of an object by receiving a reflected signal; and when the wireless communication device operates in the Wi-Fi mode, transmitting and receiving Wi-Fi signals.

### Brief Description of the Drawings

FIG. 1 is a diagram illustrating a transceiver circuit according to one embodiment of the present invention.
FIG. 2 is a diagram showing that the transceiver circuit alternately operates in a Wi-Fi mode and a radar mode according to one embodiment of the present invention.
FIG. 3 is a flowchart of a control method of the transceiver circuit according to one embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

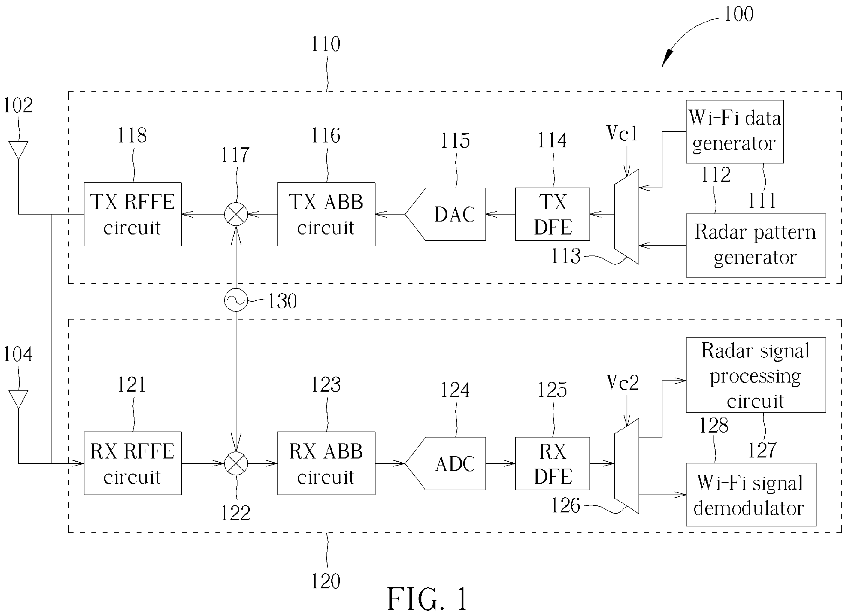

FIG. 1 is a diagram illustrating a transceiver circuit 100 according to one embodiment of the present invention. As shown in FIG. 1, the transceiver circuit 100 comprises a transmitter 110, a receiver 120, an oscillator 130, and at least two antennas 102 and 104. The transmitter 110 comprises a Wi-Fi data generator 111, a radar pattern generator 112, a multiplexer 113, a transmitter digital front-end(TX DFE) 114, a digital-to-analog converter (DAC) 115, a transmitter analog baseband (TX ABB) circuit 116, a mixer 117 and a transmitter radio frequency front-end (TX RFFE) circuit 118. The receiver 120 comprises a receiver radio frequency front-end (RX RFFE) circuit 121, a mixer 122, a receiver analog baseband (RX ABB) circuit 123, an analog-to-digital converter 124, a receiver digital front-end(RX DFE) 125, a demultiplexer 126, a radar signal processing circuit 127 and a Wi-Fi signal demodulator 128. In this embodiment, the transceiver circuit 100 supports both Wi-Fi transmission and radar-sensing/radar-scanning mechanism, and the transceiver circuit 100 can be positioned in a wireless communication device such as a television, a mobile device or any other suitable electronic device.

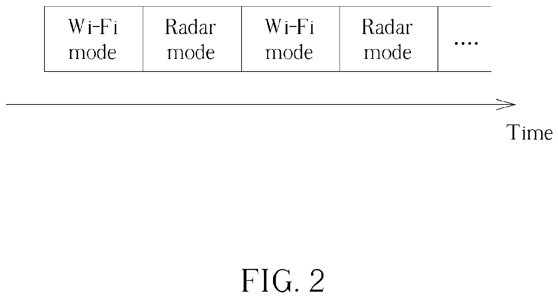

The transceiver circuit 100 can selectively operate in a Wi-Fi mode or a radar mode, or the transceiver circuit 100 can alternately operate in the Wi-Fi mode and radar mode by using time-division multiplexing mechanism as shown in FIG. 2.

Specifically, when the transceiver circuit 100 is controlled to operate in the Wi-Fi mode, the transceiver circuit 100 is configured to transmit Wi-Fi packets to other devices and receive Wi-Fi packets from other devices, wherein the operations of the transceiver circuit 100 comply with IEEE 802.11 specifications. In detail, the Wi-Fi data generator 111 generates digital baseband data that has been processed and encoded for transmission. The multiplexer 113 is controlled by a control signal Vc1 to output the digital baseband data from the Wi-Fi data generator 111 to the TX DFE 114. The TX DFE 114 performs signal filtering and signal compensation on the digital baseband data to improve signal quality, to generate a compensated digital baseband data. The DAC 115 performs a digital-to-analog conversion operation on the compensated digital baseband data to generate an analog signal. The TX ABB 116 processes the analog signal to ensure that the signal is in a proper form for efficient transmission, to generate a processed signal. The mixer 117 combines the processed signal (baseband signal) with an oscillation signal generated by the oscillator 130 to up-convert the processed signal to the RF band, to generate a Wi-Fi signal (RF signal), wherein the Wi-Fi signal belongs to one of the following frequency bands: 2.4GHz band (e.g., 2.412GHz to 2.484GHz), 5GHz band (e.g., 4.915GHz to 5.825GHz), and 6GHz band (e.g., 5.925GHz to 7.125GHz). Then, the TX RFFE 118 amplifies the Wi-Fi signal and applies necessary filtering and impedance matching to ensure that the signal is efficiently transmitted to an antenna such as the antenna 102.

In addition, when the transceiver circuit 100 is controlled to operate in the Wi-Fi mode, the receiver 120 receives a Wi-Fi signal from an antenna such as the antenna 102. The RX RFFE 121 amplifies the Wi-Fi signal from the antenna 102, and performs filtering and impedance matching to generate processed RF signal. The mixer 122 combines the processed RF signal with an oscillation signal generated by the oscillator 130 to down-convert the processed RF signal, to generate a baseband signal. The RX ABB circuit 123 processes the baseband signal, which may include filtering and/or gain control, to generate a processed baseband signal. The ADC 124 performs an analog-to-digital conversion operation on the processed baseband signal to generate a digital signal. The RX DFE 125 performs signal filtering and signal compensation on the digital signal to improve signal quality, to generate a compensated digital data. Then, the demultiplexer 126 is controlled by a control signal Vc2 to output the compensated digital data to the Wi-Fi signal demodulator 128. The Wi-Fi signal demodulator 128 decodes the compensated digital data, and reverses the modulation process used during transmission, and prepares the data for further processing.

When the transceiver circuit 100 is controlled to operate in the radar mode, the radar pattern generator 112 encodes radar waveform to generate digital baseband data. The multiplexer 113 is controlled by the control signal Vc1 to output the digital baseband data from the radar pattern generator 112 to the TX DFE 114. Then, similar to the embodiment of Wi-Fi mode, the digital baseband data from the radar pattern generator 112 is processed by the TX DFE 114, DAC 115, TX ABB circuit 116, mixer 117 and TXRFFE circuit 118, to generate a radar signal to an antenna such as the antenna 102. It is noted that the radar signal generated in the radar mode may have frequency belonging to any suitable RF frequency. In addition, the receiver 120 receives a reflected signal from another antenna such as the antenna 104, wherein the reflected signal is a reflection of the radar signal from the object, and the reflected signal may comprise one or more frames. Then, similar to the embodiment of Wi-Fi mode, the reflected signal is processed by the RX RFFE circuit 121, mixer 122, RX ABB circuit 123, ADC 124 and RX FDE 125 to generate the compensated digital data. Then, demultiplexer 126 is controlled by the control signal Vc2 to output the compensated digital data to the radar signal processing circuit 127. The radar signal processing circuit 127 decodes the compensated digital data, and uses some algorithm to determine the location, movement, and other characteristics of surrounding objects by using decoded digital data corresponding to a single frame or multiple frames of the reflected signal.

In light of above, because the transceiver circuit 100 can selectively operate in the Wi-Fi mode or radar mode, and some of the components of the transmitter 110 and some of the components of the receiver 120 can be used for both radar sensing and W-Fi transmission/reception (i.e., the radar sensing and Wi-Fi transmission/reception share some components), the transceiver circuit 100 has lower manufacturing costs for radar detection.

In one embodiment, when the transceiver circuit 100 operates in the Wi-Fi mode, a wireless communication module including the transceiver circuit 100 needs to establish a link with an another electronic device (not shown in FIG. 1), and the transceiver circuit 100 uses a channel belonging to 2.4GHz band, 5GHz band or 6GHz band to communicate with the electronic device. In addition,
when the transceiver circuit 100 operates in the radar mode, the wireless communication module including the transceiver circuit 100 does not need to establish a link with an another electronic device (i.e., the radar sensing operation can be performed without other devices), and the transceiver circuit 100 uses a channel, which may be determined by itself, to transmit the radar signal via the antenna 102, and receive the reflected signal via the antenna 104. In one embodiment, when the transceiver circuit 100 operates in the radar mode, the transceiver circuit 100 may still maintain the link previously established in Wi-Fi mode, that is, the transceiver circuit 100 may transmit the radar signal by using a second channel while a first channel established in the Wi-Fi mode is still valid for the transceiver circuit 100 and the other electronic device(s).

It is noted that the number of antennas shown in FIG. 1, and the configuration of the antennas 102 and 104 for Wi-Fi mode and radar mode are for illustrative, not a limitation of the present invention.

In the embodiment shown in FIG. 2 that the transceiver circuit 100 alternately operates in the Wi-Fi mode and radar mode by using time-division multiplexing mechanism, the period during which the transceiver operates in radar mode can be determined by the designer's consideration, such as one second. In addition, the length of time the transceiver performs Wi-Fi mode or radar mode in one period can be determined by the designer's considerations.

In the embodiment shown in FIG. 2, the transceiver circuit 100 uses a first channel (first frequency) for the Wi-Fi mode, and uses a second channel (second frequency) different from the first channel for the radar mode. Specifically, in a first period, the transceiver circuit 100 operates in the Wi-Fi mode, and the transmitter 110 generates the Wi-Fi signal with the first frequency, and transmits the Wi-Fi signal to another electronic device by using the first channel; and the receiver 120 receives Wi-Fi signal from the other device via the first channel. In addition, in a second period following the first period, the transceiver circuit 100 operates in the radar mode, and the transmitter 110 generates and broadcasts the radar signal with the second frequency, and the receiver 120 receives reflected signal with the second frequency.

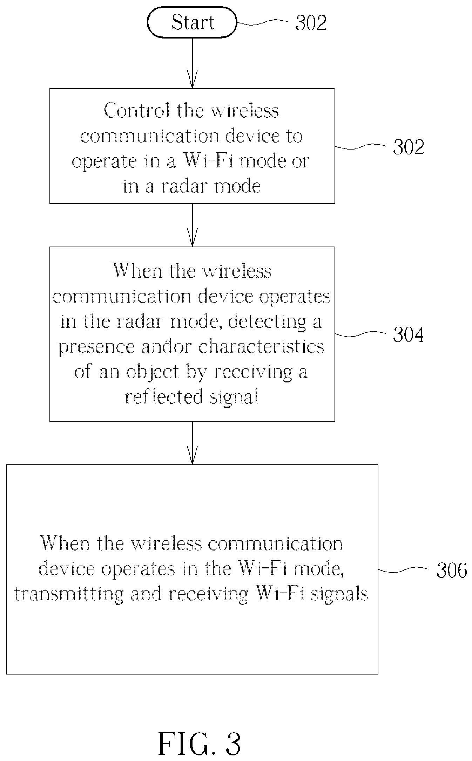

FIG. 3 is a flowchart of a control method of the transceiver circuit 100 according to one embodiment of the present invention. Referring to the above embodiment together, the flow is descried as follows.

Step 300: the flow starts.

Step 302: control the wireless communication device to operate in a Wi-Fi mode or in a radar mode.

Step 304: when the wireless communication device operates in the radar mode, detecting a presence and/or characteristics of an object by receiving a reflected signal.

Step 306: when the wireless communication device operates in the Wi-Fi mode, transmitting and receiving Wi-Fi signals.

Briefly summarized, in the wireless communication device of the present invention, by designing the transceiver circuit to selectively operate in Wi-Fi mode or radar mode, the transceiver circuit can use smaller chip area to have Wi-Fi function and radar-sensing function.

## Claims

1. A wireless communication device, comprising:
a transceiver circuit (100) having a transmitter (110) and a receiver (120);
wherein the wireless communication device is capable of operating in a Wi-Fi mode or in a radar mode; when the wireless communication device operates in the radar mode, the transceiver circuit (100) detects a presence and/or characteristics of an object by receiving a reflected signal by the receiver (120); and when the wireless communication device operates in the Wi-Fi mode, the transceiver circuit (100) transmits and receives Wi-Fi signals.

2. The wireless communication device of claim 1, wherein before receiving the reflected signal by the receiver (120), the wireless communication device causes the transmitter (110) to transmit a radar signal, wherein the reflected signal is a reflection of the radar signal from the object.

3. The wireless communication device of claim 1 or 2, further comprising a processing circuit (127) capable of processing the reflected signal to obtain information of movements or positions of the object.

4. The wireless communication device of claim 1, 2 or 3, wherein the transmitter (110) comprises a digital-to-analog converter (DAC) (115), a transmitter analog baseband (TX ABB) circuit (116), a mixer (117) and a transmitter radio frequency front-end (TX RFFE) circuit (118); and when the transceiver circuit (100) operates in the Wi-Fi mode, the DAC (115), the TX ABB circuit (116), the mixer (117) and the TX RFFE circuit (118) receive Wi-Fi data to generate the Wi-Fi signals; and when the transceiver circuit (100) operates in the radar mode, the DAC (115), the TX ABB circuit (116), the mixer (117) and the TX RFFE circuit (118) receive digital baseband data generated by encoding radar waveform, to generate a radar signal, wherein the reflected signal is a reflection of the radar signal from the object.

5. The wireless communication device of claim 1, 2, 3 or 4, wherein the receiver (120) comprises a receiver radio frequency front-end (RX RFFE) circuit (121), a mixer (122), a receiver analog baseband (RX ABB) circuit (123) and an analog-to-digital converter (ADC) (124); and when the transceiver circuit (100) operates in the Wi-Fi mode, the receiver (120) receives the Wi-Fi signals from another electronic device, and the RX RFFE circuit (121), the mixer (122), the RX ABB circuit (123) and the ADC (124) process the Wi-Fi signals to generate first digital data to a Wi-Fi signal demodulator (128); and when the transceiver circuit (100) operates in the radar mode, the receiver (120) receives the reflected signal, and the RX RFFE circuit (121), the mixer (122), the RX ABB circuit (123) and the ADC (124) processes the reflected signal to generate second digital data to a radar signal processing circuit (127), for monitoring movements or positions of the object.

6. The wireless communication device of claim 1, 2, 3, 4 or 5, wherein the transceiver circuit (100) alternately operates in the Wi-Fi mode and radar mode by using a time-division multiplexing mechanism.

7. The wireless communication device of claim 6, wherein when the transceiver circuit (100) operates in the Wi-Fi mode, the transmitter (110) transmits the Wi-Fi signals with a first frequency to another electronic device; and when the transceiver circuit (100) operates in the radar mode, the transmitter (110) transmits a radar signal with a second frequency different from the first frequency, wherein the reflected signal is a reflection of the radar signal from the object.

8. The wireless communication device of claim 7, wherein the transceiver circuit (100) does not establish a link with an electronic device by using a channel corresponding to the second frequency when the transceiver circuit (100) operates in the radar mode.

9. A control method of a wireless communication device, comprising:
controlling the wireless communication device to operate in a Wi-Fi mode or in a radar mode;
when the wireless communication device operates in the radar mode, detecting a presence and/or characteristics of an object by receiving a reflected signal; and
when the wireless communication device operates in the Wi-Fi mode, transmitting and receiving Wi-Fi signals.

10. The control method of claim 9, further comprising:
before receiving the reflected signal, transmitting a radar signal, wherein the reflected signal is a reflection of the radar signal from the object.

11. The control method of claim 9 or 10, further comprising:
processing the reflected signal to obtain information of movements or positions of the object.

12. The control method of claim 9, 10 or 11, wherein the step of controlling the wireless communication device to operate in the Wi-Fi mode or in the radar mode comprises:
controlling the wireless communication device to alternately operate in the Wi-Fi mode and radar mode by using a time-division multiplexing mechanism.

13. The control method of claim 12, wherein the step of when the wireless communication device operates in the radar mode, detecting the presence of the object by receiving the reflected signal; and the step of when the wireless communication device operates in the Wi-Fi mode, transmitting and receiving the Wi-Fi signals comprise:
when the wireless communication device operates in the Wi-Fi mode, transmitting the Wi-Fi signals with a first frequency to another electronic device; and
when the wireless communication device operates in the radar mode, transmitting a radar signal with a second frequency different from the first frequency, wherein the reflected signal is a reflection of the radar signal from the object.

14. The control method of claim 13, wherein the wireless communication device does not establish a link with an electronic device by using a channel corresponding to the second frequency when the wireless communication device operates in the radar mode.
